# EUROPEAN PATENT SPECIFICATION

(11) **EP 2 237 348 B1**
(45) Date of publication and mention of the grant of the patent: **11.09.2013**
(21) Application number: 10001839.9
(22) Date of filing: 23.02.2010
(51) Int. Cl.: H01M 4/62, H01M 10/42, H01M 4/505, H01M 10/0525, H01M 4/58

(54) **Positive electrode material for lithium secondary battery, lithium secondary battery, and secondary battery module using lithium secondary battery**
Positivelektrodenmaterial für Lithium-Sekundärbatterie, Lithium-Sekundärbatterie und Sekundärbatteriemodul, das eine Lithium-Sekundärbatterie einsetzt
Matériau d'électrode positive pour batterie secondaire au lithium, batterie secondaire au lithium et module de batterie secondaire utilisant la batterie secondaire au lithium

(30) Priority: 27.03.2009 JP 2009078004
(43) Date of publication of application: 06.10.2010
(73) Proprietor: Hitachi, Ltd., Chiyoda-ku Tokyo 100-8280 (JP)
(72) Inventor: Toyama, Tatsuya, Tokyo 100-8220 (JP); Kohno, Kazushige, Tokyo 100-8220 (JP)
(74) Representative: Beetz & Partner

(56) References cited:
- WO-A1-2008/086041
- TOM ERIKSSON: "Surface analysis of LiMn2O4 electrodes in carbonate-based electrolytes" JOURNAL OF THE ELECTROCHEMICAL SOCIETY, vol. 149, no. 1, 11 December 2001 (2001-12-11), pages A69-A78, XP002590231 ISSN: 0013-4651 DOI: 10.1149/1.1426398
- CANDACE K. CHAN: "Surface chemistry and morphology of the solid electrolyte interphase on silicon nanowire lithium-ion battery anodes" JOURNAL OF POWER SOURCES, vol. 189, no. 2, 19 January 2009 (2009-01-19), pages 1132-1140, XP002590232 DOI: 10.1016/j.jpowsour.2009.01.007
- JIAN-GANG LI: "Electrochemical performance of SrF2-coated LiMn2O4 cathode material for Li-ion batteries" TRANSACTIONS OF NONFERROUS METALS SOCIETY OF CHINA (ENGLISH EDITION), vol. 17, 21 December 2007 (2007-12-21), pages 1324-1327, XP002590233 DOI: 10.1016/S1003-6326(07)60270-2
- YO KOBAYASHI: "5 V class all-solid-state composite lithium battery with Li3PO4 coated LiNi0.5Mn1.5O4" JOURNAL OF THE ELECTROCHEMICAL SOCIETY, vol. 150, no. 12, 12 November 2003 (2003-11-12), pages A1577-A1582, XP002590234 DOI: 10.1149/1.1619988

## Description

### BACKGROUND OF THE INVENTION

### 1. Field of the Invention

The present invention relates to a lithium secondary battery. A positive electrode material for a lithium ion secondary battery as described in the preamble portion of patent claim 1 has been known from: Tom Eriksson, "Surface analysis of LiMn2O4 electrodes in carbonate-based electrolytes", Journal of the Electrochemical Society, vol. 149, no. 1, 11 December 2001, pages A69-A78, ISSN 0013-4651, DOI 10.1149/1.1426398.

### 2. Description of the Related Art

In recent years, lithium secondary batteries are generally used as power sources for small size equipment such as personal computers or portable equipment since they have high energy density. Further, application of the lithium secondary batteries has been investigated as power sources for environment-friendly electric cars and hybrid cars, and stationary power sources compensating for power fluctuation that will be caused by natural phenomena by combining with renewable energy of electric power such as solar power

generation or wind power generation. Low cost and long life are particularly required in the field of large-scale lithium batteries.

At present, lithium cobaltate is predominant as the positive electrode material for the lithium secondary battery. However, lithium cobaltate is expensive since the yield of cobalt as the starting material is small, which makes the cost reduction difficult. Further, when lithium cobaltate is kept under a high voltage state, this raises a problem that cobalt leaches out of a positive electrode material and the battery life is greatly shortened.

Therefore, with an aim of cost reduction and long operating life of the battery, utilization of nickel, iron, manganese, etc. has been studied as substitute metals for cobalt, but nickel involves a problem that lithium nickelate remarkably lowers safety during overcharge or capacity during cyclic operation. In contrast, iron recently attracts attention as lithium iron phosphate having an orthorhombic olivine structure and is excellent in safety, but this material involves a problem that the electric conductivity is low or the operation voltage is low.

On the other hand, lithium manganese composite oxide is excellent in safety during overcharge since the crystal structure is more stable in comparison with lithium cobaltate. Further, since the electric conductivity is almost 1 digit higher, lithium manganese composite oxide is advantageous in the life property. However, manganese leaches from the lithium manganese composite oxide into an electrolyte during high temperature storage. As a result, leaching-out manganese clogs a separator or forms a film layer on a negative electrode, disadvantageously leading to increase in battery resistance and deterioration of battery characteristics.

Manganese leaches out of the lithium manganese composite oxide since trivalent Mn has Jahn-Teller effect (structure of lowered symmetricity is more stable). When trivalent Mn becomes instable in terms of energy, this produces more stable bivalent Mn and tetravalent Mn and bivalent Mn leaches as ions.

For example, Japanese Patent No. 3142522 describes that a portion of Mn sites in LiMn₂O₄ having a spinel structure is substituted by Li or a transition metal so as to decrease the ratio of trivalent Mn contained in a positive electrode material, thereby improving the cycle property. When a portion of Mn is substituted by tri- or smaller valent element, the mean valence of Mn contained in a positive electrode increases and, as a result, the ratio of trivalent Mn decreases. However, using element substitution alone is not sufficient to suppress the leaching of Mn from the surface of the positive electrode material. Further, since the mean valence of Mn increases, capacity is lowered.

To suppress leaching of Mn from the surface of the positive electrode material, the surface of the lithium manganese composite oxide is covered with a metal oxide or a metal sulfide in Japanese Patent No. 3944899, while the surface of the positive electrode material is covered with a fluoro compound in JP-A No. 2008-536285. However, under the condition at high temperature and high voltage, a metal oxide or a metal sulfide of low standard generation enthalpy is instable. Therefore, the material is insufficient to suppress leaching of Mn from the surface of the positive electrode. Further, since the fluoride compound has no electric conductivity, when the surface of the electrode is completely covered, the electric conductivity is lowered, resulting in the battery characteristic deteriorating.

The above cited article from Tom Eriksson describes a positive electrode material for a lithium ion secondary battery, wherein the positive electrode material includes a lithium transition metal composite oxide containing at least manganese as a transition metal, and a metal fluoride and a lithium phosphate compound are on a surface of the lithium transition metal composite oxide.

### SUMMARY OF THE INVENTION

To address the above-described problems, the present invention intends to provide a lithium secondary battery excellent in high temperature cycle property by using, as a positive electrode material, a surface-covering lithium manganese composite oxide according to claim 1 capable of stably suppressing the leaching of Mn also at high temperature and high voltage without lowering the electric conductivity.

The positive electrode material for a lithium secondary battery of the invention has a metal fluoride and a lithium phosphate compound on the surface of a lithium transition metal composite oxide.

Further, the lithium secondary battery of the invention contains the positive electrode material for the lithium secondary battery described above.

The lithium secondary battery of the invention can extend the life particularly under a high temperature state.

### DESCRIPTION OF THE ACCOMPANYING DRAWINGS

Other objects and advantages of the invention will become apparent from the following description of embodiments with reference to the accompanying drawings in which:
Fig. 1 is a cross sectional view of a 18650 type lithium ion secondary battery according to the invention;
Fig. 2 is a view showing an X-ray diffraction pattern for a positive electrode material of the invention;
Fig. 3 is a graph showing XPS spectrum of the positive electrode of the invention; and
Fig. 4 is a view schematically showing a secondary battery system.

### DESCRIPTION OF THE PREFERRED EMBODIMENTS

A positive electrode material for a lithium secondary battery, a lithium secondary battery, and a secondary battery module according to the invention are to be descried.

The positive electrode material for the lithium secondary battery and the lithium secondary battery according to the invention have a metal fluoride and a lithium phosphate compound on the surface of the lithium transition metal composite oxide containing at least Mn as a transition metal. In the lithium secondary battery of the invention, a positive electrode capable of occluding and releasing lithium and a negative electrode capable of occluding and releasing lithium are formed by way of an electrolyte.

Further, the lithium transition metal composite oxide comprises: a lithium transition metal composite oxide having a hexagonal layered structure and represented by a compositional formula: LiMnₓM₁₋ₓO₂ (in which 0.3 ≤ x ≤ 0.6, M is one or more elements selected from the group consisting of Li, B, Mg, Al, Co, and Ni), or a lithium transition metal composite oxide having a cubic spinel structure and represented by a compositional formula: LiMn_{y}N_{2-y}O₄ (in which 1.5 ≤ y ≤ 1.9, N is one or more elements selected from the group consisting of Li, Mg, Al, and Ni).

Further, the metal fluoride is preferably AF_{z} (in which 2.0 ≤ z ≤ 3.0, and A is a metal element between group 2 and group 13 and preferably one or more members selected from the group consisting of AlF₃, NiF₂, and MgF₂. The content is preferably 0.1% by weight or more and 3.0% by weight or less of the lithium transition metal composite oxide.

Further, the lithium phosphate compound is preferably one or more members selected from the group consisting of Li₃PO₄, Li₄P₂O₇, and LiPO₃. The content is preferably 0.1% by weight or more and 3.0% by weight or less of the lithium transition metal composite oxide.

Further, in the lithium secondary battery of the invention, the capacity retention is 75% or more when put to 1000 cycle operation in a range of 2.7 V or higher and 4.2 V or lower at a charge/discharge late of 0.5 C in a atmosphere at 50°C.

Further, the secondary battery module of the invention has a plurality of electrically connected batteries and a control device for managing and controlling the state of the plurality of batteries. The control device detects the inter-terminal voltage for the plurality of batteries. The plurality of batteries each comprises a laminate having a positive electrode, a negative electrode, and an electrolyte formed in a battery can. The positive electrode has a lithium transition metal composite oxide having a hexagonal layered structure and represented by a compositional formula: LiMnₓM₁ₓO₂ (in which 0.3 ≤ x ≤ 0.6, M is one or more elements selected from the group consisting of Li, B, Mg, Al, Co, and Ni), or a lithium transition metal composite oxide having a cubic spinel structure and represented by a compositional formula: LiMn_{y}N_{2-y}O₄ (in which 1.5 ≤ y ≤ 1.9, N is one or more elements selected from the group consisting of Li, Mg, Al, and Ni). Further the lithium transition metal oxide has a metal fluoride and a lithium phosphate compound on the surface thereof.

Then, one of embodiments for practicing the invention is to be described specifically.

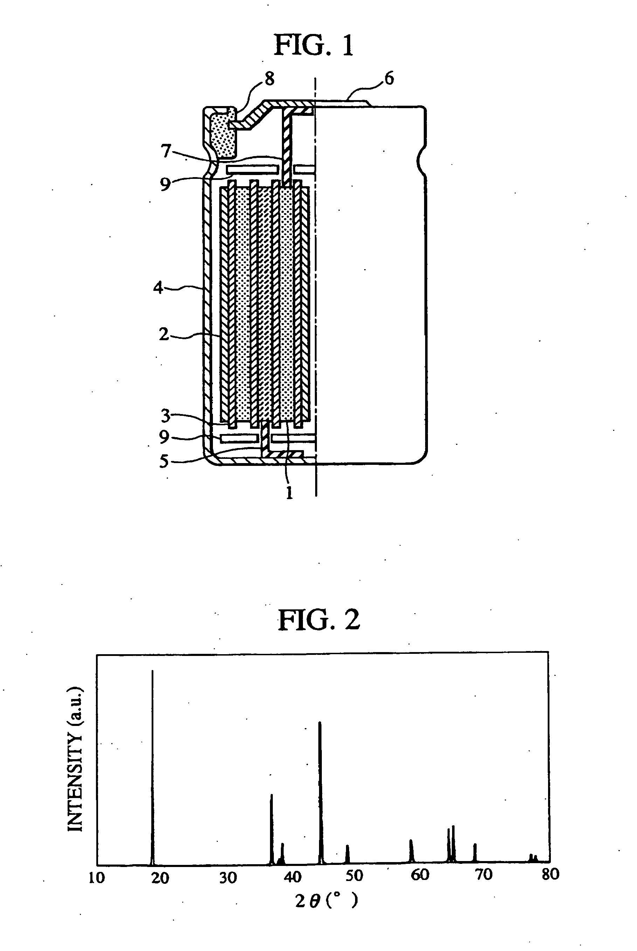

Fig. 1 shows a schematic cross sectional view of a lithium secondary battery.

In the lithium secondary battery, a separator 3 intervenes between a positive electrode 1 and a negative electrode 2. The positive electrode 1, the negative electrode 2, and the separator 3 are wound and sealed together with a non-aqueous electrolyte into a battery can 4 made of stainless steel or aluminum. A positive electrode lead 7 is formed at the positive electrode 1 and a negative electrode lead 5 is formed at the negative electrode 2 respectively, from which electric current is taken out. An insulation sheet 9 is formed between the positive electrode 1 and the negative electrode lead 5, and between the negative electrode 2 and the positive electrode lead 7 respectively. A packing 8 is formed between the battery can 4 in contact with the negative electrode lead 5 and a lid 6 in contact with the positive electrode lead 7 for preventing leakage of the electrolyte and isolating the plus electrode and the minus electrode.

The positive electrode 1 is formed by coating a current collector comprising aluminum or the like with a positive electrode mix. The positive electrode mix comprises an active material contributing to occlusion and release of lithium, a conductive material for improving the electric conductivity and a binder for ensuring intimate contact with a current collector.

The negative electrode 2 is formed by coating the current collector comprising copper or the like with a negative electrode mix. The negative electrode mix has an active material, a conductive material, a binder, etc. For the active material of the negative electrode 2, metal lithium, a carbon material, or a material capable of intercalating lithium or forming a lithium compound can be used and the carbon material is particularly preferred. The carbon material includes graphites such as natural graphites and artificial graphites and amorphous carbon, for example, carbides of coal type coke and coal type pitch, and carbides of petroleum type coke and petroleum type pitch, and carbides of pitch coke. The carbon materials described above applied with various surface treatments are preferred. The carbon materials may be used not only alone but also as a combination of two or more of them. Further, materials capable of intercalating lithium or forming a lithium compound include metals such as aluminum, tin, silicon, indium, gallium, and magnesium, alloys containing these elements, and metal oxides containing tin, silicon, etc. Further, composite materials of the metals, alloys, or metal oxides and carbon materials such as graphite type material or amorphous carbon as described above can also be sited.

As the active material for the positive electrode 1, a lithium transition metal composite oxide is used. As the transition metal, it is preferred that at least inexpensive Mn is contained and a lithium manganese composite oxide (hereinafter referred to as "composite oxide") is used. Those having various crystal structures have been known as such composite oxide, and it is preferred to use those having hexagonal layered structure and represented by the compositional formula: LiMnₓM₁₋ₓO₂ (in which 0.3 ≤ x ≤ 0.6 and M is one or more elements selected from the group consisting of Li, B, Mg, Al, Co, and Ni) and those having a cubic spinel structure and represented by the compositional formula: LiMn_{y}N_{2-y}O₄ (in which 1.5 ≤ y ≤ 1.9 and N is one or more elements selected from the group consisting of Li, Mg, Al, and Ni). In LiMnₓM₁₋ₓO₂ and LiMn_{y}N_{2-y}O₄, diffusion path for Li are 2-dimensional and 3-dimensional respectively. Since orthorhombic olivine structure represented by LiFePO₄, as a representative example, has a 1-dimensional diffusion path for Li, the positive electrode material of the layered structure and the spinel structure have an advantage that the Li electric conductivity is higher than that of the positive electrode material having the olivine structure. However, it has been known that in the positive electrode material of the layered structure and the spinel structure, Li diffusion paths are hindered by site exchange of Li and Mn to lower the Li conductivity. For suppressing the site exchange between Li and the transition metal, occupation ratio of Mn in the lithium diffusion paths can be lowered by substituting a portion of transition metal sites by dissimilar metals. As the element used for substitution, those elements with lower valence number such as tri or smaller valence are preferred for decreasing the ratio of trivalent Mn. In the invention, the ratio of the trivalent Mn can be decreased without lowering Li diffusion by using monovalent Li, bivalent Mg or Ni, or trivalent B, Al, or Co for the positive electrode material of the layered structure, and monovalent Li, bivalent Mg or Ni or trivalent Al as the substituent element for the positive electrode material of the spinel structure.

The content x for Mn in the positive electrode material having the layered structure is: 0.3 ≤ x ≤ 0.6. When x < 0.3, contribution to the cost reduction for the lithium secondary battery by the use of Mn is insufficient. On the other hand, when 0.6 < x, many impurities such as inert Mn₂O₃, Mn₃O₄, and Li₂MnO₃ not contributing to the battery reaction are formed to lower the battery capacity. It is preferably: 0.3 ≤ x ≤ 0.5.

The content y for Mn in the positive electrode material having the spinel structure is: 1.5 ≤ y ≤ 1.9. When y < 1.5, the mean valence of Mn is high and the amount of Mn contributing to donation and acceptance of Li is decreased to lower the battery capacity. On the other hand, when 1.9 < y, Mn tends to be leached to possibly shorten the life time. It is preferably: 1.7 ≤ y ≤ 1.88.

The amount of oxygen is defined as 2 in the layered structure and as 4 in the spinel structure and it has been known that this may be somewhat deviated from a stoichiometric composition depending on the baking condition.

To suppress the leaching of Mn from the surface of the positive electrode material during high temperature storage, it has been found preferable that a metal fluoride and a lithium phosphate compound are present on the surface of the composite oxide. The metal fluoride is represented by AF_{z} (in which 2.0 ≤ z ≤ 3.0, and A is a metal element between group 2 and group 13), has higher standard enthalpy of formation compared with a metal oxide or a metal sulfide, and can be present stably even under severe conditions such as high temperature and high voltage. Further, since the metal fluoride is present stably with relation to hydrogen fluoride generated by decomposition of lithium salt, etc. in an electrolyte, the acid resistance can be improved remarkably to suppress leaching of Mn. Since it is preferred that the metal fluoride is inexpensive and light in the weight, MgF₂, AlF₃, and NiF₂ are preferred.

It has been found preferred that the content of the metal fluoride is 0.1% by weight or more and 3.0% by weight or less of the composite oxide. The metal fluoride present on the surface of the composite oxide decreases the area of contact between the composite oxide and the electrolyte and suppresses the leaching of Mn due to active ingredients such as hydrogen fluoride contained in the electrolyte. Accordingly, when the content of the metal oxide is less than 0.1% by weight of the composite oxide, a role of decreasing the area of contact between the composite oxide and the electrolyte cannot be provided sufficiently. On the other hand, in a case when the content of the metal fluoride exceeds 3.0% by weight, since the metal fluoride itself is an insulator, this remarkably lowers the capacity. In this case, each weight of MgF₂, AlF₃, and NiF₂ per one mol is 62.3, 84.0, and 96.7 g, respectively. Since the weights of the metal fluorides described above are different with each other, a more preferred range for the weight is also different. Each of MgF₂ and AlF₃ is 0.2% by weight or more and 1.2% by weight or less, and NiF₂ is 0.3% by weight or more and 1.8% by weight or less of the composite oxide.

While the kind and the content of the metal fluoride are important for suppressing leaching of Mn, the state of coverage is also one of parameters indispensable for suppressing the leaching of Mn. The metal fluoride is preferably present in the form of covering 50% or more and 99% or less of the surface of the composite oxide. This is because the metal fluoride itself is an insulator and the electric conductivity is lowered when it completely covers the surface. Further, the thickness of the cover film is also preferably about 5 nm or more and 50 nm or less. When the thickness is less than 5 nm, cracking is caused due to expansion and shrinkage of the positive electrode material during charge/discharge and the leaching of Mn can no more be suppressed. On the other hand, when it exceeds 50 nm, the electronic conductivity is lowered abruptly.

Further, by applying a heat treatment after covering the composite oxide by the metal fluoride, a solid solution layer is formed at the boundary between the metal fluoride and the composite oxide. The solid solution layer is considered to have a structure in which the metal element in the metal fluoride substitutes on Mn sites in the composite oxide, and contributes to the stabilization of Mn in the composite oxide. Without heat treatment, intimate adhesion between the metal fluoride and the composite oxide is poor and the covering film comprising the metal fluoride is destroyed by the expansion and shrinkage of the positive electrode material during charge/discharge reaction to possibly eliminate the effect of covering.

Further, it has been found that since the electric conductivity is lowered when the composite oxide is covered with the metal fluoride alone, lowering of the electric conductivity can be suppressed by distributing a lithium phosphate compound together with the metal fluoride. The lithium phosphate compound includes Li₃PO₄, Li₄P₂O₇, and LiPO₃ of high electric conductivity and LiFPO₄, LiMnPO₄, LiNiPO₄, and LiCoPO₄ capable of occluding and releasing lithium although the electronic conductivity is low. In the invention, it is preferred that the lithium phosphate compound has high electric conductivity and has Li₃PO₄, Li₄P₂O₇, or LiPO₃ together with the metal fluoride. In particular, Li₃PO₄ is superior to other compounds in the heat stability and the electric conductivity, and it is most suitable.

Further, distribution of the lithium phosphate compound is also important. For example, when it is present between the composite oxide and the metal fluoride, this is not preferred since the effect of improving the electric conductivity by the lithium phosphate compound is small and, in addition, intimate adhesion between the composite oxide and the metal fluoride is lowered to decrease the effect of suppressing the leaching of Mn by the metal fluoride. Lithium phosphate compound is preferably present more on the metal fluoride or on the surface of the composite oxide not covered with the metal fluoride. When at least one-half or more of the lithium phosphate compound to be contained is distributed on the sites described above, it is possible to compatibilize suppression for the leaching of Mn by the metal fluoride and the improvement in the electric conductivity due to the lithium phosphate compound.

It has been found that the content of the lithium phosphate compound is 0.1% by weight or more and 3.0% by weight or less of the composite oxide. When the content of the lithium phosphate compound is less than 0.1% by weight, lowering of the electric conductivity cannot be compensated. When the content is 3.0% by weight or more, the compound is peeled from the composite oxide and present as a dissimilar material to lower the battery characteristic. More preferably, it is 0.2% by weight or more and 2.0% by weight or less.

To cause the metal fluoride and the lithium phosphate compound to be present on the surface of the composite oxide, a surface covering treatment is necessary. At first, three patterns may be considered as the step of covering the surface of the composite oxide by the metal fluoride and the lithium phosphate compound, that is, in a state of powder, in a state of electrode or a state of operating as a battery. When covering is applied in a state of electrode, since the electrode is usually coated on both surfaces of a current collector, applying the covering treatment on both surfaces of the current collector is necessary. Furthermore, since the current collector foil at the not-coated portion of the electrode should not be covered, this makes the step complicate. On the other hand, when the covering is applied in the state of operation as the battery, the metal fluoride and the lithium phosphate compound have to be added as additives in the electrolyte. In this case, when the particle diameter of the additive is larger than the pore size of the separator, clogging in the separator is caused to greatly deteriorate the battery characteristic. Further, when the coating film is formed electrochemically on the surface of the positive electrode, making the application of the heat treatment is difficult. This raises a problem that the surface covering film is destroyed by expansion and shrinkage of the positive electrode material due to charge/discharge, thereby failing to obtain the effect of covering.

Accordingly, the surface covering treatment is preferably conducted in the state of the powder. The method of the surface treatment on the powder generally includes a solid phase method and a liquid phase method and the liquid phase method is preferred. The advantage of the liquid phase method is that the surface of the composite oxide can be covered uniformly, the particle diameter of the covering material can be controlled, the surface of the composite oxide may be less injured physically, etc.

In the present invention, two kinds of materials, that is, the metal fluoride and the lithium phosphate compound are present on the surface of the composite oxide.

It may not suffice that the metal fluoride and the lithium phosphate compound are merely present. The coating state is important for compatibilizing the suppression of the leaching of Mn from the surface of the positive electrode and the electric conductivity. The metal fluoride has a role of decreasing the area of contact between the positive electrode material and the electrolyte and is preferably distributed widely on the surface of the positive electrode. On the other hand, since the lithium phosphate compound has a role of maintaining the electric conductivity which is lowered by the metal fluoride, it is preferably present on the metal fluoride or on the surface of the composite oxide not covered with the metal fluoride.

Accordingly, in the surface treatment step, the surface of the positive electrode is at first coated with the metal fluoride and then with the lithium phosphate compound thereon. Subsequently, the intimate adhesion between the positive electrode material and the coating film is improved by the heat treatment. It has been found that by covering in this order, a firm film which is less destroyed even by expansion and shrinkage of the positive electrode material during charge/discharge can be formed.

To cover the surface of the positive electrode by the metal fluoride, the following procedures may also be adopted. At first, the surface of the positive electrode is covered by the metal oxide or the metal sulfide and maintained in a fluorine gas atmosphere to convert the coating film on the surface to a metal fluoride. Then, after covering the lithium phosphate compound as described above, a heat treatment is applied.

The positive electrode material, for the lithium secondary battery, having the metal fluoride and the lithium phosphate compound on the surface of the lithium transition metal composite oxide may be used alone, or two or more kinds of the positive electrode material and the covering compound may be used in admixture while changing the covering condition. Further, it may be used in admixture with a not-covered positive electrode material or a positive electrode material having an orthorhombic olivine structure.

The lithium secondary battery of the invention has a charge retention of 75% or more and, preferably, 80% or more when the battery is put to 1,000 cycles of operation within a range of 2.7 V or higher and 4.2 V or lower at a charge/discharge rate of 0.5 C in a atmosphere at 50°C.

"Charge/discharge rate 1C" means that 100% charge is completed in one hour when charge starts from a state where the battery is completely discharged, and that 100% discharge is completed in one hour when discharge starts from a state where the battery is completely charged. That is, this means that the charge or discharge rate is 100% per one hour. Accordingly, in a case where charge/discharge rate is 0.5 C, the charge or discharge rate is 100% per 2 hours, that is, 100% charge or discharge is completed in 2 hours.

Then, a manufacturing method in which the composite oxide is used as the positive electrode material is to be described.

As the starting material for the positive electrode material, the followings can be used.

As the lithium compound, lithium hydroxide, lithium carbonate, lithium nitrate, lithium acetate, lithium chloride, lithium sulfate, etc. can be used and lithium hydroxide and lithium carbonate are preferred.

As the manganese compound, manganese hydroxide, manganese carbonate, manganese nitrate, manganese acetate, manganese sulfate, manganese oxide, etc. can be used, and manganese carbonate and manganese oxide are preferred. The compound as the substitution element includes hydroxides, carbonates, nitrates, acetates, sulfites, oxides, etc.

The materials as the raw material are supplied as a powder of a predetermined compositional ratio, and this is pulverized and mixed by a mechanical method using, for example, a ball mill. Pulverization and mixing may be conducted by using either dry or wet process. Then, the obtained powder is baked at 800°C or higher and 1000°C or lower, preferably, 850°C or higher and 950°C or lower. The atmosphere upon baking is preferably an oxidative gas atmosphere such as oxygen or air. A mean secondary particle diameter of the powder obtained after baking is preferably 3 µm or more and 30 µm or less. When the diameter is less than 3 µm, the specific surface area is excessively large thereby increasing the area of contact between the electrolyte and the positive electrode material, and Mn tends to be leached. On the other hand, when the diameter exceeds 30 µm, the Li diffusion paths in the positive electrode material are made longer which is disadvantageous for occlusion and releasing of Li. More preferably, the diameter is 5 µm or more and 25 µm or less.

The thus obtained positive electrode material powder is used and then a surface treatment is applied.

The surface treatment method by the liquid phase method is described below.

A nitrate, an acetate, or a sulfate containing a metal element selected from the group consisting of Mg, Al, and Ni is dissolved by a predetermined amount of water or an organic solvent. Further a fluorine-containing compound is dissolved, separately, by using the same solvent. As the fluorine-containing compound, ammonium fluoride is preferred. Then, after mixing the two kinds of solutions, pH is adjusted such that the aqueous solution becomes weakly alkaline of pH of 8 or more and 10 or less by using a pH controller. The pH controller includes, for example, ethanolamine, sodium hydroxide, and aqueous ammonia. By forming such an weakly alkaline solution, reaction between the metal source and the compound as the fluorine source is accelerated and a metal fluoride is precipitated. The positive electrode material described above is mixed in the solution thus prepared, and a metal fluoride is deposited on the surface. Then, after adding water or an organic solvent in which the phosphate is dissolved, the solvent is evaporated from the solution. The solvent is preferably evaporated by stirring under heating or spray drying. Finally, the obtained powder is subjected to a heating treatment at 300°C or higher and 700°C or lower, preferably, 400°C or higher and 600°C or lower. By the heating treatment, precipitates deposited on the surface of the positive electrode particle are reacted and intimate adhesion can be provided between the metal fluoride and the positive electrode material. The time for the heating treatment is one hour or more and 20 hours or less and, preferably, 3 hours or more and 8 hours or less.

Alternatively, the metal fluoride can also be used as a cover without adding the fluoro compound by keeping the same in a fluorine gas atmosphere. As the fluorine gas, a nitrogen trifluoride gas is preferred.

### (Confirmation of Crystal Structure)

The crystal structure of the manufactured positive electrode material was measured for a diffraction profile by a radiation source CuKα using an automatic X-ray diffractometer (RINT-Ultima III, manufactured by Rigaku Corp., hereinafter simply referred to as XRD). The crystal structure was confirmed based on the peak angles of the obtained diffraction profile.

### (Method of Measuring Mean Particle Diameter)

The mean particle diameter of the positive electrode material was measured as below by the laser diffraction/scattering method using a laser diffraction/scattering particle diameter distribution analyzer (LA-920 manufactured by Horiba Seisakusho Co.). At first, 0.2% by weight of sodium hexamethaphosphate mixed as a dispersant to purified water was used, and materials were charged. For suppressing the coagulation of the materials, after applying supersonic waves for 5 minutes, the median diameter (particle diameter for particles at a relative amount of particles of 50%) was measured and defined as a mean particle diameter.

### (Method of Measuring Weight Ratio of Elements)

The weight ratio of metal elements used for the surface treatment and the weight ratio of Mn dissolved in the electrolyte were measured by a high frequency inductively coupled plasma atomic emission (hereinafter simply referred to as ICP) spectrometer (P-4000, manufactured by Hitachi Ltd.). At first, 5 g of a positive electrode material, and 2 mL of nitric acid or 5 mL of electrolyte were charged into 45 mL of ion exchange water placed in a beaker, and stirred it by a stirrer for 30 minutes. After leaving it for 5 minutes, a filtrate filtered through filter paper was sprayed together with an argon gas in a high frequency atmosphere, and the light intensity inherent in each of the excited element was measured to calculate the weight ratio of elements.

### (Confirmation of Covering Compound)

For the bonding state of the surface coating compound, spectrum for each of elements was measured by a radiation AlKa using an X-ray photoelectronic (hereinafter simply referred to as XPS) spectrometer (AXIS-HS, manufactured by Shimadzu/KRATOS Co). For the coating compound, the spectrum for the metal element contained in the compound was measured and the peak position was compared with that of the Standard Reference Database 20 Version 3.5 for NIST, to decide the compound species.

An example of the method of manufacturing a lithium secondary battery is as shown below.

A slurry is prepared by mixing the positive electrode material together with a conductive material of a carbon material powder and a binder such as polyvinylidene fluoride. The mixing ratio of the conductive material to the positive electrode material is preferably 3% by weight or more and 10% by weight or less. The mixing ratio of the binder to the positive electrode material is preferably 2% by weight or more and 10% or less by weight.

In this case, for uniformly dispersing the positive electrode material in the slurry, it is preferably kneaded sufficiently by using a kneader.

Both surfaces of an aluminum foil are coated with the obtained slurry with a thickness of 15 µm or more and 25 µm or less, for example, by a roll transfer machine. After both surface coating, an electrode plate of the positive electrode plate 1 is formed by press drying. The thickness for the portion of the mix formed by mixing the positive electrode material, the conductive material, and the binder is preferably 200 µm or more and 250 µm or less.

As with the positive electrode, the negative electrode material is mixed with the binder, used as a coat and pressed to form an electrode. In this case, the thickness of the electrode mix is preferably 20 µm or more and 70 µm or less. In a case of the negative electrode, a copper foil of a thickness of 7 µm or more and 20 µm or less is used as a current collector. The mixing ratio in the coating is preferably, for example, 90:10 as the weight ratio between the negative electrode material and the binder.

The covered and pressed positive electrode and negative electrode are cut each into a predetermined length, and a tab for drawing out a current is formed by spot welding or supersonic welding. The tab comprises a current collector in a rectangular shape and a metal foil of the same material, and is disposed for taking out the current from the electrode. A separator comprising a finely porous film, for example, of polyethylene (PE) or polypropylene (PP) is sandwiched and stacked between the positive electrode and the negative electrode each having a tab, and they are wound into a cylindrical shape to form an electrode group and contained in a cylindrical container. Alternatively, a bag-shaped separator in which an electrode is contained may be stacked successively and contained in a square container. The material for the container is preferably stainless steel or aluminum. After containing the electrode group in the battery can, an electrolyte is injected therein and sealed tightly.

For the electrolyte, it is preferred to use those formed by dissolving lithium hexafluoro phosphate (LiPF₆), lithium tetrafluro borate (LiBF₄), lithium perchlorate (LiClO₄), etc. as an electrolyte into a solvent such as diethyl carbonate (DEC), dimethyl carbonate (DMC), ethylene carbonate (EC), propylene carbonate(PC), vinylene carbonate (VC), methyl acetate (MA), ethyl methyl carbonate (EMC), methyl propyl carbonate (MPC), etc. The concentration of the electrolyte is preferably 0.7 M or more and 1.5 M or less. The electrolyte is poured and the battery container was closed tightly to complete a battery.

Examples are to be described more specifically but the invention is not restricted to the examples.

### [Example 1]

### (Manufacture of Positive Electrode Material)

In Example 1, lithium carbonate, triamanganese tetraoxide, cobalt dioxide, and nickel oxide were used as the starting material for manufacturing the positive electrode material, they were weighed such that Li:Mn:Co:Ni was 1.02:0.34:0.5:0.14 at the raw material ratio, and pulverized admixed in a wet process by a pulverizer. After drying, the powder was placed in a high purity alumina container and provisionally baked in an atmospheric air at 600°C for 12 hours in order to improve the sinterability. Then, the powder was again placed in the high purity alumina container and baked under the conditions of keeping for 12 hours in an atmospheric air at 900°C, air cooled and then crushed and classified. Fig. 2 shows an X-ray diffraction profile for the obtained positive electrode material. The obtained peak was compared with International Center for Diffraction Data Card (PDF-2) to confirm that this was in a hexagonal layered structure. Accordingly, the composition of the positive electrode material is LiMn_{0.34}(Li_{0.02}Co_{0.5}Ni_{0.14})O₂. Further, when the grain size distribution of the positive electrode material was measured, the mean particle diameter was 6 µm.

The surface treatment step is to be described.

100 mL of ion exchange water in which 0.66 g of ammonium fluoride was dissolved was added to 100 mL of ion exchange water in which 2.3 g of aluminum nitrate was dissolved, to prepare a mixed solution. Then, lithium hydroxide was added as a pH controller to the mixed solution to control pH of the mixed solution to 10.0. Then, 100 g of the positive electrode material was charged and, finally, 300 mL of ion exchange water in which 0.78 g of hydrogen diammonium phosphate was dissolved was added and stirred at a normal temperature for one hour. Then, the solution was dried by a spray drier and the obtained powder was placed in a highly pure alumina container and heated at 600°C for 5 hours.

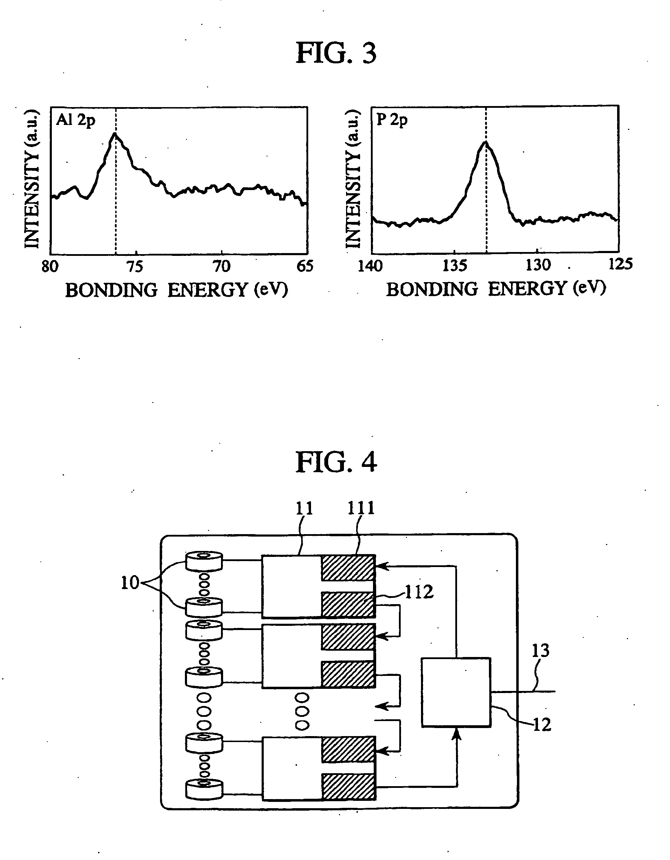

Fig. 3 shows spectra for Al2p and P2p obtained by XPS analysis of the positive electrode material after the surface treatment. Al2p had a peak at 76.3 eV, and this agreed with AlF₃ from the data base. Further P2p had a peak at 133.6 eV and this agreed with Li₃PO₄ from the data base. From the result, it was found that AlF₃ and Li₃PO₄ were present on the uppermost surface of the positive electrode material.

The positive electrode material was put to ICP analysis and it was found that AlF₃ was 0.5% by weight and a Li₃PO₄ was 0.5% by weight of the positive electrode material, based on the weight ratio of Al and P to Mn.

### (Manufacture of Positive Electrode)

A positive electrode was manufactured by using the obtained positive electrode material. The positive electrode material, the carbonaceous conductive material, and binder dissolved previously into N-methyl-2-pirrolidone (NMP) as the solvent were mixed at a ratio of 85:10:5 respectively expressed by mass%, and an aluminum current collector foil was coated uniformly with mixed slurry with a thickness of 20 µm. Then, it was dried at 120°C, and compression molded by a press such that the electrode density was 2.7 g/cm³. After compression molding, it was punched out into a disc-shape of 15 mm diameter by using a punching tool to manufacture a positive electrode.

### (Manufacture of Test Battery)

By using the positive electrode described above, and using metal lithium as the negative electrode and a mixed solvent of ethyl carbonate and dimethyl carbonate as a liquid electrolyte to manufacture a test battery. The liquid electrolyte uses 1.0 mol of LiPF₆ as an electrolyte.

Evaluation for the leaching amount of Mn is to be described.

The leaching amount of Mn from the positive electrode was evaluated by the following procedures. With a test battery, after charging until 4.3 V was reached with constant current/constant voltage at a charge rate of 0.5 C, it was discharged until a desired amount of discharged voltage was reached with a constant current at a discharge rate of 0.5 C. After repeating the operations three cycles, the battery was charged until 4.3 V was reached with a constant current/constant voltage at a charge rate of 0.5 C. Then, the test battery was disassembled, and the positive electrode was taken out therefrom. The charged electrode and 5 cc of a liquid electrolyte in which 1 mol/L of LiPF₆ was dissolved in an organic solvent solution formed by mixing EC and MEC at volume ratio of 1:2 were placed in a container made of a fluoro resin (PFA) and closed tightly in a globe box in an argon atmosphere. The container was taken out of the globe box, placed in a thermostat bath at 80°C and left for 1 week. After one week, the container was taken out of the thermostat bath, and 5 cc of the electrolyte was taken out in the globe box in an argon atmosphere. Mn dissolved in the taken out electrolyte was measured quantitatively by using an ICP apparatus.

The calculated leaching amount of Mn was 7 ppm. Table 1 shows the characteristic of the positive electrode material manufactured in Example 1.

**Table 1**

| Positive electrode material | LiMnₓM₁₋ₓO_{y} | | | AF_{z} | Amount of AF_{z} (wt %) | Amount of Li₃PO₄ (wt %) | Leaching amount of Mn (ppm) |
|---|---|---|---|---|---|---|---|
| | x | y | M | | | | |
| Example 1 | 0.31 | 2 | Li, Co, Ni | AlF₃ | 0.5 | 0.5 | 7 |

Manufacture of a 18650 (18 mm diameter x 650 mm height) type battery is to be described.

A 18650 type battery was manufactured by using the obtained positive electrode material. At first, the surface treated positive electrode material, the conductive material of carbon material powder and a binder of PVdF were mixed at the weight ratio of 90:5:5 and an appropriate amount of NMP was added to prepare a slurry.

The prepared slurry was stirred by a planetary mixer for 3 hours to conduct kneading.

Then, both surfaces of an aluminum foil of 20 µm thickness were coated with the kneaded slurry by using a coating machine of a roll transfer machine. This was pressed by a roll press machine such that the mix density was 2.70 g/cm³, to obtain a positive electrode.

By using graphite as the negative electrode active material, carbon black as the conductive material, and PVdF as the binder, they were mixed at the weight ratio of 92:2:6 and stirred by a slurry mixer for 30 minutes to conduct kneading.

Both surfaces of a copper foil of 10 µm thickness were coated with the kneaded slurry by using a coating machine and, after drying, pressed by a roll press, to obtain a negative electrode.

The positive electrode and the negative electrode were cut each into a predetermined size, and a current collector tab was disposed by supersonic welding at a slurry not-coated portion.

A porous polyethylene film was sandwiched between the positive electrode and the negative electrode and, after winding into a cylindrical shape, they were inserted into a 18650 type battery.

After connecting the current collector tab and the lid of the battery can, the lid of the battery can and the battery can were welded by laser welding to tightly seal the battery.

Finally, a non-aqueous liquid electrolyte was poured from a pore port formed into the battery can to obtain a 18650 type battery.

Evaluation for the rate characteristic is to be described.

The rate characteristic of the manufactured 18650 type battery was evaluated by the following procedures. At first, the battery was charged until 4.2 V was reached with constant current/constant voltage at a charge rate of 0.2 C. After interval of one hour reoperation recess, the battery was discharged until the discharged amount was reached 2.5 V with a constant current at a discharge rate of current of 0.2 C or more and 10 C or less respectively. The discharge capacity upon discharge at 10 C to the discharge capacity upon discharge at 0.2 C was defined as a rate ratio (%). Table 2 shows a result.

Evaluation for the cycle characteristic is to be described.

The cycle characteristic of the manufactured 18650 type battery was evaluated by the following procedures. The battery was charged until a charge terminal voltage was reached 4.2 V with constant current while flowing a current of 0.5 C and, after interval of one hour operation recess, the battery was discharged until the discharged amount was reached 2.7 V with constant current of the same current value. The operations were repeated for 1,000 cycles and the capacity retention at 1000 cycle/1 cycle was calculated. The test atmosphere temperature was set at 50°C. Table 2 shows the result.

**Table 2**

| Positive electrode material | Rate ratio (%) | Capacity retention (%) |
|---|---|---|
| Example 1 | 92 | 85 |

### [Example 2]

In this example, boron oxide was added as the raw material and the raw materials were weighed such that Li:Mn:Co:Ni:B was 1.02:0.3:0.3:0.14:0.24 at raw material ratio, and the positive electrode material was manufactured in the same manner as in Example 1. The crystal structure in this example was a hexagonal layered structure and had a composition of LiMn_{0.3}(Li_{0.02}Co_{0.3}Ni_{0.14}B_{0.24})O₂.

Then, a surface treatment was applied in the same manner as in Example 1 by using 4.6 g of aluminum nitride and 1.3 g of ammonium fluoride. As a result of XPS analysis of the positive electrode material, presence of AlF₃ and Li₃PO₄ could be confirmed on the uppermost surface, and from the result of ICP analysis, it was found that AlF₃ was 1.0% by weight and Li₃PO₄ was 0.5% by weight of the positive electrode material. In this example, the leaching amount of Mn was 9 ppm by weight.

Table 3 shows the characteristic of the positive electrode material manufactured in Example 2.

A 18650 type battery was manufactured in the same manner as in Example 1 and the energy density and the capacity retention were evaluated. The results is shown in Table 4.

It can be seen that also the positive electrode manufactured in Example 2 shows high performance.

### [Example 3]

In this example, aluminum oxide was used instead of cobalt dioxide as the raw material and the raw materials were weighed such that Li:Mn:Ni:Al was 1.02:0.5:0.2:0.27 at raw material ratio, and the positive electrode material was manufactured in the same manner as in Example 1. The crystal structure in this example was a hexagonal layered structure and the composition was LiMn_{0.5}(Li_{0.02}Ni_{0.2}Al_{0.27})O₂.

Then, a surface treatment was applied in the same manner as in Example 1 by using 0.7 g of magnesium nitrate instead of aluminum nitrate and 0.26 g of ammonium fluoride and 0.31 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 0.2% by weight and Li₃PO₄ was 0.2% by weight of the positive electrode material. In this example, the leaching amount of Mn was 12 ppm by weight.

Table 3 shows the characteristic of the positive electrode material manufactured in Example 3.

A 18650 type battery was manufactured in the same manner as in Example 1 and the energy density and the capacity retention were evaluated. The result is shown in Table 4.

It can be seen that also the positive electrode manufactured in Example 3 shows high performance.

### [Example 4]

In this example, aluminum oxide and boron oxide were used instead of cobalt dioxide as the raw material and the raw materials were weighed such that Li:Mn:Ni:Al:B was 1.02:0.3:0.1:0.27:0.2 at raw material ratio, and the positive electrode material was manufactured in the same manner as in Example 1. The crystal structure in this example was a hexagonal layered structure and the composition was LiMn_{0.3}(Li_{0.02}Ni_{0.1}Al_{0.27}:B_{0.2})O₂.

Then, a surface treatment was applied in the same manner as in Example 1 by using 0.64 g of nickel nitrate instead of aluminum nitrate and 1.3 g of ammonium fluoride and 3.1 g of hydrogen diammonium phosphate. As a result of XPS analysis of the positive electrode material, presence of NiF₂ and Li₃PO₄ could be confirmed at the outermost surface, and from the result of ICP analysis, it was found that NiF₂ was 0.5% by weight and Li₃PO₄ was 2.0% by weight of the positive electrode material. In this example, the leaching amount of Mn was 4 ppm by weight.

Table 3 shows the characteristic of the positive electrode material manufactured in Example 4

A 18650 type battery was manufactured in the same manner as in Example 1 and the energy density and the capacity retention were evaluated. The result is shown in Table 4.

It can be seen that also the positive electrode manufactured in Example 4 shows high performance.

### [Example 5]

In this example, aluminum oxide was added as the raw material and the raw materials were weighed such that Li:Mn:Co:Ni:Al was 1.05:0.4:0.3:0.15:0.1 at raw material ratio, and the positive electrode material was manufactured in the same manner as in Example 1. The crystal structure in this example was a hexagonal layered structure and had a composition of LiMn_{0.4}(Li_{0.05}Co_{0.3}Ni_{0.15}Al_{0.1})O₂.

Then, a surface treatment was applied in the same manner as in Example 1 by using 1.8 g of magnesium nitrate instead of aluminum nitrate and 1.6 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 0.5% by weight and Li₃PO₄ was 1.0% by weight of the positive electrode material. In this example, the leaching amount of Mn was 1 ppm by weight.

Table 3 shows the characteristic of the positive electrode material manufactured in Example 5.

A 18650 type battery was manufactured in the same manner as in Example 1 and the energy density and the capacity retention were evaluated. The result is shown in Table 4.

It can be seen that also the positive electrode manufactured in Example 5 shows high performance.

### [Example 6]

In this example, magnesium oxide was added as the raw material and the raw materials were weighed such that Li:Mn:Co:Ni:Mg was 1.02:0.4:0.35:0.20:0.03 at raw material ratio, and the positive electrode material was manufactured in the same manner as in Example 1. The crystal structure in this example was a hexagonal layered structure and had a composition of LiMn_{0.4}(Li_{0.02}Co_{0.35}Ni_{0.2}Mg_{0.03})O₂.

Then, a surface treatment was applied in the same manner as in Example 1 by using 1.6 g of hydrogen diammonium phosphate. As a result of XPS analysis of the positive electrode material, presence of AlF₃ and Li₃PO₄ could be confirmed at the outermost surface, and from the result of ICP analysis, it was found that AlF₃ was 0.5% by weight and Li₃PO₄ was 1.0% by weight of the positive electrode material. In this example, the leaching amount of Mn was 5 ppm by weight.

Table 3 shows the characteristic of the positive electrode material manufactured in Example 6.

A 18650 type battery was manufactured in the same manner as in Example 1 and the energy density and the capacity retention were evaluated. The result is shown in Table 4.

It can be seen that also the positive electrode manufactured in Example 6 shows high performance.

### [Example 7]

In this example, magnesium oxide was used instead of cobalt dioxide as the raw material and the raw materials were weighed such that Li:Mn:Ni:Mg was 1.02:0.6:0.2:0.18 at the raw material ratio, and the positive electrode material was manufactured in the same manner as in Example 1. The crystal structure in this example was a hexagonal layered structure and the composition was LiMn_{0.6}(Li_{0.02}Ni_{0.2}Mg_{0.18})O₂.

Then, a surface treatment was applied in the same manner as in Example 1 by using 1.4 g of aluminum nitrate and 0.4 g of ammonium fluoride and 0.31 g of hydrogen diammonium phosphate. As a result of XPS analysis of the positive electrode material, presence of AlF₃ and Li₃PO₄ could be confirmed at the outermost surface, and from the result of ICP analysis, it was found that AlF₃ was 0.3% by weight and Li₃PO₄ was 0.2% by weight of the positive electrode material. In this example, the leaching amount of Mn was 5 ppm by weight.

Table 3 shows the characteristic of the positive electrode material manufactured in Example 7.

A 18650 type battery was manufactured in the same manner as in Example 1 and the energy density and the capacity retention were evaluated. The result is shown in Table 4.

It can be seen that also the positive electrode manufactured in Example 7 shows high performance.

### [Example 8]

In this example, lithium carbonate, trimanganese tetraoxide, and magnesium oxide were used as the raw material and the raw materials were weighed such that Li:Mn:Mg was 1.08:1.88:0.04 at the raw material ratio, and the positive electrode material was manufactured in the same manner as in Example 1. The crystal structure in this example was cubic spinel structure and the composition was LiMn_{1.88}(Li_{0.08}Mg_{0.04})O₄.

Then, a surface treatment was applied in the same manner as in Example 1 by using 4.6 g of aluminum nitrate, and 1.3 g of ammonium fluoride and 2.3 g of hydrogen diammonium phosphate. As a result of XPS analysis of the positive electrode material, presence of AlF₃ and Li₃PO₄ could be confirmed at the outermost surface, and from the result of ICP analysis, it was found that AlF₃ was 1.0% by weight and Li₃PO₄ was 1.5% by weight of the positive electrode material. In this example, the leaching amount of Mn was 21 ppm by weight.

Table 3 shows the characteristic of the positive electrode material manufactured in Example 8.

A 18650 type battery was manufactured in the same manner as in Example 1 and the energy density and the capacity retention were evaluated. The result is shown in Table 4.

It can be seen that also the positive electrode manufactured in Example 8 shows high performance.

### [Example 9]

In this example, lithium carbonate, trimanganese tetraoxide, and nickel oxide were used as the raw material and the raw materials were weighed such that Li:Mn:Ni was 1.04:1.9:0.06 at the raw material ratio, and the positive electrode material was manufactured in the same manner as in Example 1. The crystal structure in this example was a cubic spinel structure and the composition was LiMn_{1.9}(Li_{0.04}Ni_{0.06})O₄.

Then, a surface treatment was applied in the same manner as in Example 1 by using 14 g of magnesium nitrate instead of aluminum nitrate and 4 g of ammonium fluoride and 3.1 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 3.0% by weight and Li₃PO₄ was 2.0% by weight of the positive electrode material. In this example, the leaching amount of Mn was 10 ppm by weight.

Table 3 shows the characteristic of the positive electrode material manufactured in Example 9.

A 18650 type battery was manufactured in the same manner as in Example 1 and the energy density and the capacity retention were evaluated. The result is shown in Table 4.

It can be seen that also the positive electrode manufactured in Example 9 shows high performance.

### [Example 10]

In this example, lithium carbonate, trimanganese tetraoxide and aluminum oxide were used as the raw material and the raw materials were weighed such that Li:Mn:Al was 1.08:1.7:0.22 at the raw material ratio, and the positive electrode material was manufactured in the same manner as in Example 1. The crystal structure in this example was a cubic spinel structure and the composition was LiMn_{1.7}(Li_{0.08}Al_{0.22})O₄.

Then, a surface treatment was applied in the same manner as in Example 1 by using 2.5 g of nickel nitrate instead of aluminum nitrate and 0.73 g of ammonium fluoride and 3.1 g of hydrogen diammonium phosphate. As a result of XPS analysis of the positive electrode material, presence of NiF₂ and Li₃PO₄ could be confirmed at the outermost surface, and from the result of ICP analysis, it was found that NiF₂ was 2.0% by weight and Li₃PO₄ was 2.0% by weight of the positive electrode material. In this example, the leaching amount of Mn was 14 ppm by weight.

Table 3 shows the characteristic of the positive electrode material manufactured in Example 10.

A 18650 type battery was manufactured in the same manner as in Example 1 and the energy density and the capacity retention were evaluated. The result is shown in Table 4.

It can be seen that also the positive electrode manufactured in Example 10 shows high performance.

### [Example 11]

In this example, lithium carbonate, trimanganese tetraoxide, nickel oxide, and aluminum oxide were used as the raw material and the raw materials were weighed such that Li:Mn:Ni:Al was 1.02:1.5:0.2:0.28 at the raw material ratio, and the positive electrode material was manufactured in the same manner as in Example 1. The crystal structure in this example was a cubic spinel structure and the composition was LiMn_{1.5}(Li_{0.02}Ni_{0.2}Al_{0.28})O₄.

Then, a surface treatment was applied in the same manner as in Example 1 by using 3.5 g of magnesium nitrate instead of aluminum nitrate and 1.3 g of ammonium fluoride and 1.6 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 1.0% by weight and Li₃PO4 was 1.0% by weight of the positive electrode material. In this example, the leaching amount of Mn was 7 ppm by weight.

Table 3 shows the characteristic of the positive electrode material manufactured in Example 11.

A 18650 type battery was manufactured in the same manner as in Example 1 and the energy density and the capacity retention were evaluated. The result is shown in Table 4.

It can be seen that also the positive electrode manufactured in Example 11 shows high performance.

### [Example 12]

In this example, lithium carbonate, trimanganese tetraoxide, magnesium oxide and aluminum oxide were used as the raw materials and the raw materials were weighed such that Li:Mn:Mg:Al was 1.04:1.82:0.04:0.1 at the raw material ratio, and the positive electrode material was manufactured in the same manner as in Example 1. The crystal structure in this example was a cubic spinel structure and the composition was LiMn_{1.82}(Li_{0.04}Mg_{0.04}Al_{0.1})O₄.

Then, a surface treatment was applied in the same manner as in Example 1 by using 0.64 g of nickel nitrate instead of aluminum nitrate and 0.33 g of ammonium fluoride and 1.6 g of hydrogen diammonium phosphate. As a result of XPS analysis of the positive electrode material, presence of NiF₂ and Li₃PO₄ could be confirmed at the outermost surface, and from the result of ICP analysis, it was found that NiF₂ was 0.5% by weight and Li₃PO₄ was 1.0% by weight of the positive electrode material. In this example, the leaching amount of Mn was 18 ppm by weight.

Table 3 shows the characteristic of the positive electrode material manufactured in Example 12.

A 18650 type battery was manufactured in the same manner as in Example 1 and the energy density and the capacity retention were evaluated. The result is shown in Table 4.

It can be seen that also the positive electrode manufactured in Example 12 shows high performance.

**Table 3**

| Positive electrode material | LiMnₓM₁₋ₓO_{y} | | | AF_{z} | Amount of AF_{z} | Amount of Li₃PO₄ | Leaching amount of Mn (ppm) |
|---|---|---|---|---|---|---|---|
| | x | y | M | | | | |
| Example 2 | 0.30 | 2 | Li, Co, Ni, B | AlF₃ | 1.0 | 0.5 | 9 |
| Example 3 | 0.50 | 2 | Li, Al, Ni | MgF₂ | 0.2 | 0.2 | 12 |
| Example 4 | 0.42 | 2 | Li, Ni, Al, B | NiF₂ | 0.5 | 2.0 | 4 |
| Example 5 | 0.40 | 2 | Li, Al, Co, Ni | MgF₂ | 0.5 | 1.0 | 1 |
| Example 6 | 0.40 | 2 | Li, Mg, Co, Ni | AlF₃ | 0.5 | 1.0 | 5 |
| Example 7 | 0.60 | 2 | Li, Ni, Mg | AlF₃ | 0.3 | 0.2 | 5 |

| Positive electrode material | LiMnₓM₂₋ₓO_{y} | | | AF_{z} | Amount of AF_{z} | Amount of Li₃PO₄ | Leaching amount of Mn (ppm) |
|---|---|---|---|---|---|---|---|
| Example 8 | 1.88 | 4 | Li, Mg | AlF₃ | 1.0 | 1.5 | 21 |
| Example 9 | 1.90 | 4 | Li, Ni | MgF₂ | 3.0 | 2.0 | 10 |
| Example 10 | 1.70 | 4 | Li, Al | NiF₂ | 2.0 | 2.0 | 14 |
| Example 11 | 1.50 | 4 | Li, Al, Ni | MgF₂ | 1.0 | 1.0 | 7 |
| Example 12 | 1.82 | 4 | Li, Mg, Al | NiF₂ | 0.5 | 1.0 | 18 |

**Table 4**

| Positive electrode material | Rate ratio (%) | Capacity retention (%) |
|---|---|---|
| Example 2 | 87 | 90 |
| Example 3 | 86 | 82 |
| Example 4 | 94 | 88 |
| Example 5 | 91 | 93 |
| Example 6 | 92 | 90 |
| Example 7 | 85 | 83 |
| Example 8 | 90 | 80 |
| Example 9 | 87 | 82 |
| Example 10 | 88 | 77 |
| Example 11 | 85 | 86 |
| Example 12 | 87 | 75 |

### (Comparative Example 1)

In this comparative example, in comparison with Example 1, tricobalt tetraoxide as the raw material was removed and the raw materials were weighed such that Li:Mn:Ni was 1.02:0.8:0.18 at raw material ratio and the positive electrode material was manufactured in the same manner as in Example 1. The crystal structure in this example was a hexagonal layered structure and had a composition of LiMn_{0.8}(Li_{0.02}Ni_{0.18})O₂.

Then, a surface treatment was applied in the same manner as in Example 1 by using 1.8 g of magnesium nitrate instead of aluminum nitrate. As a result of XPS analysis of the positive electrode material, presence of MgF₂ and Li₃PO₄ could be confirmed at the outermost surface, and from the result of ICP analysis, it was found that MgF₂ was 0.5% by weight and Li₃PO₄ was 0.5% by weight of the positive electrode material. In this comparative example, the leaching amount of Mn was 65 ppm by weight. This is because the Mn ratio in the positive electrode material was high and the mean valence number of Mn was excessively low.

Table 5 shows the characteristic of the positive electrode material manufactured in Comparative Example 1.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 1 was inferior in both of the rate ratio and the capacity retention compared with that manufactured in the examples.

**Table 5**

| Positive electrode material | LiMnₓM₁₋ₓO_{y} | | | AF_{z} | Amount of AF_{z} (wt%) | Amount of Li₃PO₄ (wt%) | Leaching amount of Mn (ppm) |
|---|---|---|---|---|---|---|---|
| | x | y | M | | | | |
| Comp. Example 1 | 0.80 | 2 | Li, Ni | MgF₂ | 0.5 | 0.5 | 65 |
| Comp. Example 2 | 0.31 | 2 | Li, Co, Ni | - | - | 0.5 | 308 |
| Comp. Example 3 | 0.30 | 2 | Li, Co, Ni, B | MgF₂ | 0.05 | 0.1 | 35 |
| Comp. Example 4 | 0.30 | 2 | Li, Co, Ni, B | AlF₃ | 9.0 | 3.0 | 0 |
| Comp. Example 5 | 0.31 | 2 | Li, Co, Ni, | AlF₃ | 2.0 | - | 10 |
| Comp. Example 6 | 0.30 | 2 | Li, Co, Ni, B | MgF₂ | 1.0 | 0.05 | 10 |
| Comp. Example 7 | 0.30 | 2 | Li, Co, Ni, B | MgF₂ | 1.0 | 8.0 | 9 |

| Positive electrode material | LiMnₓM₂₋ₓO_{y} | | | AF_{z} | Amount of AF_{z} (wt %) | Amount of Li₃PO₄ (wt %) | Leaching amount of Mn (ppm) |
|---|---|---|---|---|---|---|---|
| Comp. Example 8 | 1.88 | 4 | Li,Mg | NiF₂ | 1.0 | 1.5 | 161 |
| Comp. Example 9 | 1.96 | 4 | Li, Mg | AlF3 | 1.0 | 1.0 | 117 |

**Table 6**

| Positive electrode material | Rate ratio (%) | Capacity retention (%) |
|---|---|---|
| Comp. Example 1 | 73 | 56 |
| Comp. Example 2 | 86 | 39 |
| Comp. Example 3 | 89 | 68 |
| Comp. Example 4 | 11 | 65 |
| Comp. Example 5 | 32 | 78 |
| Comp. Example 6 | 50 | 81 |
| Comp. Example 7 | 88 | 60 |
| Comp. Example 8 | 66 | 46 |
| Comp. Example 9 | 63 | 55 |

### (Comparative Example 2)

In this comparative example, a positive electrode material was manufactured in the same manner as in Example 1.

Then, aluminum nitrate and ammonium fluoride were removed and a surface treatment was applied in the same manner as in Example 1. As a result of XPS analysis of the positive electrode material, presence of Li₃PO₄ at the outermost surface could be confirmed, and from the result of ICP analysis, it was found that Li₃PO₄ was 0.5% by weight of the positive electrode material. In this comparative example, the leaching amount of Mn was 308 ppm by weight. This is because the effect of decreasing the area of contact between the electrolyte and the positive electrode material caused by the metal fluoride was not obtained.

Table 5 shows the characteristic of the positive electrode material manufactured in Comparative Example 2.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 2 was inferior in the capacity retention compared with that manufactured in the Examples.

### (Comparative Example 3)

In this comparative example, a positive electrode material was manufactured in the same manner as in Example 2.

Then, a surface treatment was applied in the same manner as in Example 1 by using 0.23 g of magnesium nitrate instead of aluminum nitrate and 0.07 g of ammonium fluoride and 0.04 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 0.05% by weight and Li₃PO₄ was 0.1% by weight of the positive electrode material. In this comparative example, the leaching amount of Mn was 35 ppm by weight. This is because the amount of the metal fluoride was small and the positive electrode surface could not be covered sufficiently.

Table 5 shows the characteristic of the positive electrode material manufactured in Comparative Example 3.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 3 was inferior in the capacity retention compared with those manufactured in the Examples.

### (Comparative Example 4)

In this comparative example, a positive electrode material was manufactured in the same manner as in Example 2.

Then, a surface treatment was applied in the same manner as in Example 1 by using 41 g of aluminum nitrate, 12 g of ammonium fluoride, and 4.7 g of hydrogen diammonium phosphate. As a result of XPS analysis of the positive electrode material, presence of AlF₃ and Li₃PO₄ could be confirmed at the outermost surface, and from the result of ICP analysis, it was found that AlF₃ was 9.0% by weight and Li₃PO₄ was 3.0% by weight of the positive electrode material. In this comparative example, the leaching amount of Mn was at the detection limit or less (less than 0.5 ppm).

Table 5 shows the characteristic of the positive electrode material manufactured in Comparative Example 4.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 4 was inferior both in the rate ratio and the capacity retention compared with those manufactured in the examples. This is because the metal fluoride as an insulator completely covered the surface of the positive electrode to lower the conductivity.

### (Comparative Example 5)

In this comparative example, a positive electrode material was manufactured in the same manner as in Example 1.

Then, hydrogen diammonium phosphate was removed and a surface treatment was applied in the same manner as in Example 1 by using 9.2 g of aluminum nitrate and 2.6 g of ammonium fluoride. As a result of XPS analysis of the positive electrode material, presence of AlF₃ could be confirmed at the outermost surface, and from the result of ICP analysis, it was found that AlF₃ was 2.0% by weight of the positive electrode material. In this comparative example, the leaching amount of Mn was 10 ppm by weight.

Table 5 shows the characteristic of the positive electrode material manufactured in Comparative Example 5.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 5 was greatly inferior in the rate ratio compared with those manufactured in the examples. This is because the electrode was covered only with the metal fluoride as an insulator.

### (Comparative Example 6)

In this comparative example, a positive electrode material was manufactured in the same manner as in Example 2.

Then, a surface treatment was applied in the same manner as in Example 1 by using 3.6 g of magnesium nitrate instead of aluminum nitrate, and 1.3 g of ammonium fluoride and 0.08 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 1.0% by weight and Li₃PO₄ was 0.05% by weight of the positive electrode material. In this comparative example, the leaching amount of Mn was 10 ppm by weight.

Table 5 shows the characteristic of the positive electrode material manufactured in Comparative Example 6.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 6 was inferior in the rate ratio compared with those manufactured in the examples. This is because the amount of the lithium phosphate compound was small, which was insufficient for the conductivity.

### (Comparative Example 7)

In this comparative example, a positive electrode material was manufactured in the same manner as in Example 2.

Then, a surface treatment was applied in the same manner as in Example 1 by using 3.6 g of magnesium nitrate instead of aluminum nitrate, and 1.3 g of ammonium fluoride and 12 g of hydrogen diammonium phosphate. As a result of XPS analysis of the positive electrode material, presence of MgF₂ and Li₃PO₄ could be confirmed at the outermost surface, and from the result of ICP analysis, it was found that MgF₂ was 1.0% by weight and Li₃PO₄ was 8.0% by weight of the positive electrode material. In this comparative example, the leaching amount of Mn was 9 ppm by weight.

Table 5 shows the characteristic of the positive electrode material manufactured in Comparative Example 7.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 7 was inferior in the capacity retention compared with those manufactured in the examples. This is because the amount of the lithium phosphate compound was excessively large.

### (Comparative Example 8)

In this comparative example, a positive electrode material was manufactured in the same manner as in Example 8.

Then, in the surface treatment step, 100 g of a positive electrode material was charged into 300 mL of ion exchange water in which 2.3 g of hydrogen diammonium phosphate was dissolved. After lithium hydroxide was added to 200 mL of ion exchange water in which 1.2 g of nickel nitrate and 0.38 g of ammonium fluoride were dissolved to prepare a mixed solution at pH 10, it was added to a solution containing the positive electrode material and stirred at a normal temperature for one hour. After that, a surface treatment was applied in the same manner as in Example 1. As a result of XPS analysis of the positive electrode material, presence of NiF₂ and Li₃PO₄ could be confirmed at the outermost surface, and from the result of ICP analysis, it was found that NiF₂ was 1.0% by weight and Li₃PO₄ was 1.5% by weight of the positive electrode material. In this comparative example, the leaching amount of Mn was 161 ppm by weight. This is because the positive electrode surface could not be covered sufficiently by the metal fluoride. This state was considered to be formed that since the coating order was changed, the lithium phosphate compound was present on the surface of the positive electrode and the metal fluoride was coated further thereover.

Table 5 shows the characteristic of the positive electrode material manufactured in Comparative Example 8.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 8 was inferior both in the rate ratio and capacity retention compared with those manufactured in the examples.

### (Comparative Example 9)

In this example, lithium carbonate, trimanganese tetraoxide, and magnesium oxide were used as the raw material and the raw materials were weighed such that Li:Mn:Mg was 1.02:1.96:0.02 at the raw material ratio, and the positive electrode material was manufactured in the same manner as in Example 1. The crystal structure in this example was a cubic spinel structure and the composition was LiMn_{1.96}(Li_{0.02}Mg_{0.02})O₄.

Then, a surface treatment was applied in the same manner as in Example 1 by using 4.6 g of aluminum nitrate, 1.3 g of ammonium fluoride, and 1.6 g of hydrogen diammonium phosphate. As a result of XPS analysis of the positive electrode material, presence of AlF₃ and Li₃PO₄ could be confirmed at the outermost surface, and from the result of ICP analysis, it was found that AlF₃ was 1.0% by weight and Li₃PO₄ was 1.0% by weight of the positive electrode material. In this comparative example, the leaching amount of Mn was 117 ppm by weight. This is because the amount of Mn contained in the positive electrode material having the cubic spinel structure is excessively large and the ratio of trivalent manganese was increased.

Table 5 shows the characteristic of the positive electrode material manufactured in Comparative Example 9.

A 18650 type battery was manufactured in the same manner as in Example 1 and the energy density and the capacity retention were evaluated. The result is shown in Table 6.

From Table 5 and Table 6, it was found that the positive electrode manufactured in Comparative Example 9 was inferior both in the rate ratio and capacity retention compared with those manufactured in the examples.

The embodiment of the invention can provide a lithium secondary battery capable of suppressing leaching of Mn and excellent in the rate ratio and the cycle life by providing a metal fluoride compound and a lithium phosphate compound on the surface of lithium transition metal composite oxide.

Fig. 4 shows an outline of a secondary battery system on which lithium secondary batteries manufactured in the embodiments are mounted.

A plurality of numbers, for example, four or more and eight or less Lithium secondary batteries 10 are connected in series to form a group of lithium secondary batteries. Then, a plurality of groups of the lithium secondary batteries is further provided to constitute a secondary battery module.

Cell controllers 11 are formed corresponding to the groups of the lithium secondary batteries as described above and control the lithium secondary batteries 10. The cell controllers 11 monitor overcharge or overdischarge of the lithium secondary batteries 10 or monitor the residual capacity of the lithium secondary batteries.

A battery controller 12 provides a signal to the cell controller 11, for example, by using communication means and obtains a signal from the cell controller 11, for example, by using communication means.

The battery controller 12 manages the input and output of power to and from the cell controller 11.

The battery controller 12 provides a signal, for example, to the input section 111 of the first cell controller 11. Such a signal is transmitted in series from the output section 112 of the cell controller 11 to the input section 111 of other cell controller 11. Such a signal is given from the output section 112 of the final cell controller 11 to the battery controller 12.

Thus, the battery controller 12 can monitor the cell controller 11.

## Claims

1. A positive electrode material for a lithium ion secondary battery,
wherein the positive electrode material includes a lithium transition metal composite oxide containing at least Manganese as a transition metal,
and a metal fluoride and a lithium phosphate compound are on a surface of the lithium transition metal composite oxide,
**characterized in that** a solid solution layer is formed at the boundary between the metal fluoride and the lithium transition metal composite oxide, and the content of the metal fluoride is 0.1% by weight or more and 3.0% by weight or less of the lithium transition metal composite oxide and the content of the lithium phosphate compound is 0.1% by weight or more and 3.0% by weight or less of the lithium transition metal composite oxide,
and wherein the surface of the positive electrode is, at first, coated with the metal fluoride and, then, with the lithium phosphate compound thereon.

2. The positive electrode material according to claim 1, wherein the lithium transition metal composite oxide is represented by LiMnₓM₁₋ₓO₂,
in which 0.3 ≤ x ≤ 0.6, and M is one or more elements selected from the group consisting of Li, B, Mg, Al, Co, and Ni,
or represented by LiMn_{y}N_{2-y}O₄,
in which 1.5 ≤ y ≤ 1.9, and N is one or more elements selected from the group consisting of Li, Mg, Al, and Ni.

3. The positive electrode material according to claim 2, wherein the lithium transition metal composite oxide represented by LiMnₓM₁₋ₓO₂ has a hexagonal layered structure.

4. The positive electrode material according to claim 2, wherein the lithium transition metal composite oxide represented by LiMn_{y}N_{1-y}O₄ has a cubic spinel structure.

5. The positive electrode material according to claim 1, wherein the metal fluoride is represented AF_{z}, in which A is a metal element, and 2.0 ≤ z ≤ 3.0.

6. The positive electrode material according to claim 5, wherein the metal element A is a metal selected from metal elements between group 2 and group 13.

7. The positive electrode material according to claim 1, wherein the metal fluoride is one or more compounds selected from the group consisting of AlF₃, NiF₂, and MgF₂.

8. The positive electrode material according to claim 1, wherein the lithium phosphate compound is one or more compounds selected from the group consisting of Li₃PO₄, Li₄P₂O₇, and LiPO₃.

9. The positive electrode material according to claim 1, wherein the thickness of the metal fluoride is between 5 nm and 50 nm.

10. The positive electrode material according to claim 1,
wherein a heat treatment is applied after covering the composite oxide by the metal fluoride.

11. A lithium ion secondary battery, comprising a positive electrode (1) according to at least one of claims 1 to 10, a negative electrode (2), a separator (3) located between said positive electrode (1) and said negative electrode (2), and an electrolyte.

12. A secondary battery module comprising:
a plurality of batteries (10) electrically connected; and
a control device (11, 12) for managing and controlling the state of the plurality of batteries (10) which detects the inter-terminal voltage for the plurality of batteries (10);
wherein each of the plurality of batteries comprises a positive electrode (1), a negative electrode (2), an electrolyte, and a battery can (4), in which the positive electrode (1) and the negative electrode (2) are layered,
wherein the positive electrode (1) is a positive electrode according to at least one of the claims 2 to 10.

## Patentansprüche

1. Material für eine positive Elektrode einer Lithiumionen-Sekundärbatterie,
wobei das Material der positiven Elektrode ein Lithium-Übergangsmetall-Mischoxid umfasst mit mindestens Mangan als Übergangsmetall,
und sich ein Metallfluorid und eine Lithiumphosphatverbindung auf einer Oberfläche des Lithium-Übergangsmetall-Mischoxids befinden,
**dadurch gekennzeichnet, dass** eine Schicht einer festen Lösung auf der Grenze zwischen dem Metallfluorid und dem Lithium-Übergangsmetall-Mischoxid gebildet ist, und wobei der Anteil an Metallfluorid 0,1 Gew.-% oder mehr und 3,0 Gew.-% oder weniger des Lithium-Übergangsmetall-Mischoxids beträgt, und der Anteil der Lithiumphosphatverbindung 0,1 Gew.-% oder mehr und
3,0 Gew.-% oder weniger des Lithium-Übergangsmetall-Mischoxids beträgt,
und wobei die Oberfläche der positiven Elektrode zuerst mit dem Metallfluorid beschichtet ist und dann mit der Lithiumphosphatverbindung darauf.

2. Material einer positiven Elektrode nach Anspruch 1,
wobei das Lithium-Übergangsmetall-Mischoxid dargestellt wird durch LiMnₓM₁₋ₓO₂,
wobei 0,3 ≤ x ≤ 0,6 ist, und M eines oder mehrere Elemente ausgewählt aus der Gruppe bestehend aus Li, B, Mg, Al, Co und Ni ist, oder dargestellt wird durch LiMn_{y}N_{2-y}O₄,
wobei 1,5 ≤ y ≤ 1,9 ist, und N ein Element oder mehrere Elemente ausgewählt aus der Gruppe bestehend aus Li, Mg, Al und Ni ist.

3. Material einer positiven Elektrode nach Anspruch 2,
wobei das Lithium-Übergangsmetall-Mischoxid, dargestellt durch LiMnₓM₁₋ₓO₂, eine hexagonal geschichtete Struktur aufweist.

4. Material einer positiven Elektrode nach Anspruch 2,
wobei das Lithium-Übergangsmetall-Mischoxid, dargestellt durch LiMn_{y}N_{1-y}O_{4,} eine kubische Spinellstruktur aufweist.

5. Material einer positiven Elektrode nach Anspruch 1,
wobei das Metallfluorid dargestellt wird durch AF_{z}, wobei A ein Metallelement darstellt und 2,0 ≤ z ≤ 3,0 ist.

6. Material einer positiven Elektrode nach Anspruch 5,
wobei das Metallelement A ein Metall ist, ausgewählt aus den Metallelementen zwischen Gruppe 2 und Gruppe 13.

7. Material einer positiven Elektrode nach Anspruch 1,
wobei das Metallfluorid eine oder mehrere Verbindung(en) ist, ausgewählt aus der Gruppe bestehend aus AlF₃, NiF₂ und MgF₂.

8. Material einer positiven Elektrode nach Anspruch 1,
wobei die Lithiumphosphatverbindung eine Verbindung oder mehrere Verbindungen ist, ausgewählt aus der Gruppe bestehend aus Li₃PO₄, Li₄P₂O₇ und LiPO₃.

9. Material einer positiven Elektrode nach Anspruch 1,
wobei die Dicke der Metallfluoridschicht zwischen 5 nm und 50 nm beträgt.

10. Material einer positiven Elektrode nach Anspruch 1,
wobei nach dem Bedecken des Mischoxids mit dem Metallfluorid eine Wärmebehandlung angewendet wird.

11. Lithiumionen-Sekundärbatterie mit einer positiven Elektrode (1) nach mindestens einem der Ansprüche 1 bis 10, einer negativen Elektrode (2), einem Separator (3), der zwischen der positiven Elektrode (1) und der negativen Elektrode (2) angeordnet ist, und einem Elektrolyten.

12. Sekundärbatteriemodul mit einer Mehrzahl von elektrisch miteinander verbundenen Batterien (10) und einer Steuervorrichtung (11, 12) zum Regeln und Steuern des Zustands der Mehrzahl von Batterien (10), welche die Spannung zwischen den Anschlüssen für die Mehrzahl von Batterien (10) erfasst, wobei jede der Mehrzahl von Batterien eine positive Elektrode (1), eine negative Elektrode (2), einen Elektrolyten und eine Batteriehülse (4) aufweist, in der die positive Elektrode (1) und die negative Elektrode (2) geschichtet sind, wobei die positive Elektrode (1) eine positive Elektrode nach mindestens einem der Ansprüche 2 bis 10 ist.

## Revendications

1. Matériau d'électrode positive pour une batterie secondaire au lithium-ion,
dans lequel le matériau d'électrode positive inclut un oxyde composite de lithium et d'un métal de transition contenant au moins du manganèse comme un métal de transition,
et un fluorure de métal et un composé phosphate de lithium sont sur une surface de l'oxyde composite de lithium et d'un métal de transition,
**caractérisé en ce qu'**une couche de solution solide est formée à la limite entre le fluorure de métal et l'oxyde composite de lithium et d'un métal de transition, et la teneur du fluorure de métal est 0,1 % en poids ou plus et 3,0% en poids ou moins de l'oxyde composite de lithium et d'un métal de transition et la teneur du composé phosphate de lithium est 0,1% en poids ou plus et 3,0% en poids ou moins de l'oxyde composite de lithium et d'un métal de transition,
et dans lequel la surface de l'électrode positive est, d'abord, enduite avec le fluorure de métal et, ensuite, avec le composé phosphate de lithium sur celui-ci.

2. Matériau d'électrode positive selon la revendication 1, dans lequel l'oxyde composite de lithium et d'un métal de transition est représenté par LiMnₓM₁₋ₓO₂,
dans laquelle 0,3 ≤ x ≤ 0,6, et M est un ou plusieurs élément(s) choisi(s) parmi le groupe consistant en Li, B, Mg, Al, Co, et Ni,
ou représenté par LiMn_{y}N_{2-y}O₄,
dans laquelle 1,5 ≤ y ≤ 1,9, et N est un ou plusieurs élément(s) choisi(s) parmi le groupe consistant en Li, Mg, Al, et Ni.

3. Matériau d'électrode positive selon la revendication 2, dans lequel l'oxyde composite de lithium et d'un métal de transition représenté par LiMnₓM₁₋ₓO₂ a une structure stratifiée hexagonale.

4. Matériau d'électrode positive selon la revendication 2, dans lequel l'oxyde composite de lithium et d'un métal de transition représenté par LiMn_{y}N_{2-y}O₄ a une structure de spinelle cubique.

5. Matériau d'électrode positive selon la revendication 1, dans lequel le fluorure de métal est représenté par AF_{z}, dans laquelle A est un élément métal, et 2,0 ≤ z ≤ 3,0.

6. Matériau d'électrode positive selon la revendication 5, dans lequel l'élément métal A est un métal choisi parmi des éléments métal entre le groupe 2 et le groupe 13.

7. Matériau d'électrode positive selon la revendication 1, dans lequel le fluorure de métal est un ou plusieurs composé(s) choisi(s) parmi le groupe consistant en AlF₃, NiF₂, et MgF₂.

8. Matériau d'électrode positive selon la revendication 1, dans lequel le composé phosphate de lithium est un ou plusieurs composé(s) choisi(s) parmi le groupe consistant en Li₃PO₄, Li₄P₂O₇, et LiPO₃.

9. Matériau d'électrode positive selon la revendication 1, dans lequel l'épaisseur du fluorure de métal est entre 5 nm et 50 nm.

10. Matériau d'électrode positive selon la revendication 1, dans lequel un traitement thermique est appliqué après enduction de l'oxyde composite par le fluorure de métal.

11. Batterie secondaire au lithium-ion, comprenant une électrode positive (1) selon au moins une des revendications 1 à 10, une électrode négative (2), un séparateur (3) situé entre ladite électrode positive (1) et ladite électrode négative (2), et un électrolyte.

12. Module de batteries secondaires comprenant :
une pluralité de batteries (10) électriquement connectées ; et
un dispositif de contrôle (11, 12) pour gérer et contrôler l'état de la pluralité de batteries (10), qui détecte la tension inter-bornes pour la pluralité de batteries (10) ;
dans lequel chacune de la pluralité de batteries comprend une électrode positive (1), une électrode négative (2), un électrolyte, et un bac (4) de batterie, dans lequel l'électrode positive (1) et l'électrode négative (2) sont stratifiées,
dans lequel l'électrode positive (1) est une électrode positive selon au moins une des revendications 2 à 10.
